# EUROPÄISCHE PATENTSCHRIFT

(11) **EP 1 347 209 B1**
(45) Veröffentlichungstag und Bekanntmachung des Hinweises auf die Patenterteilung: **15.04.2009**
(21) Anmeldenummer: 03001076.3
(22) Anmeldetag: 18.01.2003
(51) Int. Cl.: F16H 37/02

(54) **Geschwindigkeits-Wechselgetriebe**
Gearbox
Boîtes de vitesses

(30) Priorität: 22.03.2002 DE 10212790
(43) Veröffentlichungstag der Anmeldung: 24.09.2003
(73) Patentinhaber: AUDI AG, 85045 Ingolstadt (DE)
(72) Erfinder: Märkl, Johann, 85128 Nassenfels (DE)
(74) Vertreter: Asch, Konrad

(56) Entgegenhaltungen:
- EP-A1- 0 119 935
- EP-A1- 0 130 904
- DE-A1- 4 207 093
- DE-A1- 4 234 629
- DE-A1- 19 631 072
- FR-A1- 2 520 826
- JP-A- 58 193 965
- JP-A- 59 205 058
- JP-A- 62 031 763
- JP-A- 2001 056 045
- US-A- 3 442 346
- US-A- 4 294 137
- US-A- 5 937 711

## Beschreibung

Die Erfindung betrifft ein Geschwindigkeits-Wechselgetriebe, insbesondere für Kraftfahrzeuge, gemäß dem Oberbegriff des Patentanspruches 1.

Geschwindigkeits-Wechselgetriebe in Kraftfahrzeugen mit einem Variator wie einem Umschlingungsgetriebe oder einem Toroidgetriebe bieten aufgrund der stufenlosen Übersetzungsänderungen einen hohen Fahrkomfort und eine ausgezeichnete Anpassungsfähigkeit an den Wirkungsgrad günstigen Betrieb des Antriebsmotors im dynamischen Fahrbetrieb, jedoch kann die Auslegung der Getriebe auf hohe Motorleistungen insbesondere in definierten Übersetzungsbereichen kritisch sein.

Die JP 59 205058 A, die als nächstliegender Stand der Technik angesehen wird, zeigt ein Geschwindigkeits-Wechselgetriebe mit einem ersten Antriebsstrang mit einer ersten Kupplung zum Aktivieren des Variators und einem zweiten Antriebsstrang mit einer zweiten Kupplung zum Aktivieren einer Konstantübersetzung. Die Kupplung zum Aktivieren des Variators ist stromab des ersten Antriebsstrangs zwischen dem Variator und der Konstantübersetzung angeordnet. Die Kupplung zum Aktivieren der Konstantübersetzung ist am Eingang der konstanten Übersetzung angeordnet.

Aufgabe der Erfindung ist es, ein Geschwindigkeits-Wechselgetriebe vorzuschlagen, das kompakt, einfach und robust aufgebaut ist und das für die Übertragung hoher Motorleistungen bei günstigem Getriebewirkungsgrad in allen Geschwindigkeiten geeignet ist.

Diese Aufgabe wird durch die Merkmale des Patentanspruchs 1 gelöst.

Es wird vorgeschlagen, dass das Getriebe einen ersten Antriebsstrang mit einer Kupplung zum Aktivieren des Variators und einen zweiten Antriebsstrang mit einer zweiten Kupplung zum Aktivieren der zumindest einen konstanten Übersetzungsstufe aufweist, wodurch es über die besagten reibschlüssigen Kupplungen umschaltbar über den einen und/oder den zweiten Antriebsstrang betreibbar ist.

Dadurch sind sowohl Leistungsspitzen ohne unzulässige Überlastung von Getriebeelementen aufnehmbar, als auch günstige Getriebewirkungsgrade insbesondere in systembedingt ungünstigen Übersetzungsbereichen des Variators verwirklichbar.

Erfindungsgemäß wird vorgeschlagen, dass der zweite Antriebsstrang zwei konstante Zahnrad-Übersetzungsstufen aufweist, die als eine Anfahrstufe und eine Economy-Übersetzungsstufe ausgelegt sind und die in dem zweiten Antriebsstrang über Schaltkupplungen schaltbar sind. Die vorgeschlagenen Konstantübersetzungen decken damit exakt die Bereiche ab, die bei Variatoren wie z.B. einem Umschlingungsgetriebe systembedingt die kritischen Bereiche sind (Anfangs- und Endübersetzungsbereiche) und/oder die zudem zur Erhöhung der Getriebe-Gesamtspreizung vorteilhaft beitragen können.

Dementsprechend kann über den einen Antriebsstrang und über die Anfahrstufe mit einem einfachen Zahnradtrieb das Kraftfahrzeug angefahren werden, mit zunehmender Geschwindigkeit wird über den anderen Antriebsstrang und den Variator gleitend in den stufenlosen Betrieb übergegangen. Bei noch höherer Geschwindigkeit des Kraftfahrzeuges und ggf. Konstantfahrt (z.B. Autobahnbetrieb) wird wieder gleitend der erste Antriebsstrang aktiviert, wobei über eine Schaltkupplung die hinsichtlich der Übersetzung "lange" Economy-Übersetzungsstufe mittels einer einfachen konstanten Zahnradstufe geschaltet ist.

Bei hohen erforderlichen Leistungsübertragungen können kurzfristig und/oder geschwindigkeitsabhängig beide Antriebstränge durch Schließen beider Reibungskupplungen aktiviert sein, wobei logischerweise der Variator exakt auf die geschaltete Konstantübersetzung des einen Antriebsstranges eingestellt sein muss oder zwischen den beiden Antriebssträngen ein Ausgleichselement (z.B. Leistungsverzweigung, Kupplung mit gesteuertem Schlupf) vorzusehen ist.

Baulich besonders günstig weist der erste Antriebsstrang eine auf den Variator trieblich wirkende Eingangswelle und der zweite Antriebsstrang eine koaxial dazu angeordnete Hohlwelle auf, wobei die Hohlwelle die Antriebs-Zahnräder der als einfache Stirnradtriebe ausgebildeten Konstant-Anfahrstufe und Economy-Übersetzungsstufe trägt. Der Variator wiederum wirkt auf eine gemeinsame Abtriebswelle, die auch die korrespondierenden Zahnräder der Konstant-Übersetzungsstufen aufnimmt. Daraus resultiert eine robuste und fertigungstechnisch günstige sowie wenig aufwändige Getriebekonstruktion.

Der Variator kann ferner ein Umschlingungswandler mit hydraulisch verstellbaren An- und Abtriebsscheibenpaaren und einer Kette oder einem Band als Umschlingungsmittel sein, wobei das Abtriebsscheibenpaar unmittelbar auf der besagten Abtriebswelle angeordnet ist, während das Antriebsscheibenpaar über einen Stirnradtrieb auf einer weiteren Vorgelegewelle positioniert ist. Dadurch können bei einer baulich günstigen und robusten Getriebeauslegung in einem weiten Bereich definierte Übersetzungsverhältnisse realisiert werden.

Die beiden Antriebsstränge werden aufgrund der vorgeschlagenen koaxialen Konstruktion mit einer Hohlwelle durch eine kompakte reibschlüssige Doppelkupplung aktiviert, die vorteilhaft eine Verringerung des baulichen und des steuerungstechnischen Aufwandes ermöglicht. Es kann ferner vorteilhaft sein, wenn eine dritte Kupplung im den Variator aktivierenden Antriebsstrang abtriebsseitig angeordnet ist, weil dadurch der Variator beispielsweise im Economybetrieb über den anderen Antriebsstrang wirkungsgrad- und verschleißgünstig stillsetzbar ist.

Schließlich kann in an sich bekannter Weise der Variator als i² Getriebe ausgeführt sein, bei dem durch entsprechende Parallelschaltung eines weiteren Stirnradtriebes definierter Übersetzung und entsprechender Schaltkupplungen der Variator zweifach durch Umkehrung des Antriebsflusses durchfahrbar ist, wodurch sich dessen Spreizung quadriert oder dessen erforderlicher Bauraum vermindert.

Ein Ausführungsbeispiel der Erfindung ist im Folgenden mit weiteren Einzelheiten näher beschrieben. Die schematische Zeichnung dazu zeigt ein Geschwindigkeits-Wechselgetriebe für Kraftfahrzeuge mit einer Doppel-Reibungskupplung, einem ersten Antriebsstrang mit einem Umschlingungswandler als Variator, einem zweiten Antriebsstrang mit zwei Konstant-Übersetzungen und einem integrierten Differenzial.

Das nur schematisch als Blockschaltbild dargestellte Geschwindigkeits-Wechselgetriebe 10 für Kraftfahrzeuge ist in einem nicht dargestellten Getriebegehäuse angeordnet und weist eine erste Eingangswelle 12, eine als Hohlwelle 14 ausgeführte zweite Eingangswelle bauraum- und variator-achsabstandsbedingt, eine Vorgelegewelle 16 und eine gemeinsame Abtriebswelle 18 auf. Die genannten Wellen sind in dem nicht dargestelltem Getriebegehäuse drehbar gelagert. Die Vorgelegewelle 16 kann gegebenenfalls auch entfallen.

Die Hohlwelle 14 trägt zwei schaltbare Los-Zahnräder 20,22, die mit Fest-Zahnrädern 24, 26 auf der Abtriebswelle 18 zwei konstante Übersetzungsstufen bilden, und zwar die Zahnräder 20, 24 eine Anfahr-Übersetzung und die beiden Zahnräder 22, 26 eine "lange" Economy-Übersetzung, die insbesondere bei konstanten Autobahnfahrten Geräusch mindernd, Kraftstoff sparend und Verschleiß mindernd sich auswirkt. Die Los-Zahnräder 20, 22 sind mittels einer üblichen Synchronkupplung S1 mit einer entsprechenden Schiebemuffe mit der Hohlwelle 14 kuppelbar oder von dieser entkuppelbar.

Ferner sind auf der Eingangswelle 12 axial an die Hohlwelle 14 anschließend zwei Los-Zahnräder 28, 30 gelagert, von denen das Zahnrad 28 in Verbindung mit einem Umkehr-Zahnrad 32 und einem Fest-Zahnrad 34 auf der Abtriebswelle 18 einen Rückwärtsgang bildet. Das Umkehr-Zahnrad 32 ist dabei auf einer Stummelwelle 36 im nicht dargestellten Getriebegehäuse entsprechend drehbar gelagert.

Das zweite Los-Zahnrad 30 bildet mit einem Fest-Zahnrad 38 auf der Vorgelegewelle 16 einen Stirnradantrieb für den nachgeschalteten Variator bzw. Umschlingungswandler 40, der sich aus einem Antriebsscheibenpaar 42auf der Vorgelegewelle 16, einem auf der Abtriebswelle 18 sitzenden Abtriebsscheibenpaar 44 und einem Umschlingungsmittel bzw. einer Gliederkette 46 zusammensetzt.

Durch Verstellen der Scheibenpaare zueinander kann im Variator 40 in bekannter Weise stufenlos das Übersetzungsverhältnis verändert werden,

Die Los-Zahnräder 28, 30 werden wiederum über eine Synchronkupplung S2 (oder eine Klauenkupplung) mit einer entsprechenden Schaltmuffe mit der Eingangswelle 12 gekuppelt oder von dieser entkuppelt.

Die Eingangswelle 12 und die Hohlwelle 14 sind an eine reibschlüssig wirkende Doppelkupplung K1, K2 angeschlossen, die andererseits beispielsweise von der Kraftabgabewelle 48 einer Brennkraftmaschine des Kraftfahrzeuges angetrieben ist. Die Doppelkupplung kann hydraulisch in bekannter Weise gesteuert sein und wahlweise die Hohlwelle 14 oder die Eingangswelle 12 oder beide zusammen mit der Kraftabgabewelle 48 kuppeln.

Des weiteren werden die Schaltkupplungen bzw. Synchronkupplungen S1 und S2 in nicht dargestellter Weise automatisch über eine entsprechende Steuerungseinrichtung oder manuell mittels eines üblichen Wählhebels betätigt.

Schließlich trägt die Abtriebswelle 18 an ihrem dem Variator 40 entgegenliegendem Ende ein Antriebsritzel 50 für den Antrieb eines nicht näher dargestellten Differenziales 52, beispielsweise einem Kegelrad-Differenzial zum Antrieb der Vorderräder des Kraftfahrzeuges.

Die Funktion des Geschwindigkeits-Wechselgetriebes 10 soweit bisher beschrieben ist wie folgt:

Zum Anfahren des Kraftfahrzeuges aus dem Stillstand wird bei geöffneter Doppelkupplung K1, K2 die Synchronkupplung S1 so geschaltet, dass das Zahnrad 20 mit der Hohlwelle 14 gekuppelt ist. Dann wird die reibschlüssige Kupplung K2 geschlossen und somit der Anfahrvorgang eingeleitet, wobei der Kraftfluss über den einen Antriebsstrang des Getriebes 10 verläuft, nämlich von der Kupplung K2 über die Hohlwelle 14, die Zahnräder 20, 24 und die Abtriebswelle 18. Der Variator 40 hingegen ist von der Eingangswelle 12 aufgrund der geöffneten Synchronkupplung S2 und Kupplung K1 abgekuppelt und überträgt keine Antriebsleistung.

Nach dem Anfahren des Kraftfahrzeuges wird die Synchronkupplung S2 so geschaltet, dass das Zahnrad 30 mit der Eingangswelle 12 gekuppelt ist. Dann wird die Kupplung K2 geöffnet und gleichzeitig die Kupplung K1 geschlossen, wobei durch entsprechende Schlupfregelung der Kupplungen K1, K2 ein ruckfreier, komfortabler Wechsel des Kraftflusses gesteuert werden kann.

Nunmehr verläuft der Kraftfluss über den anderen stufenlosen Antriebsstrang des Getriebes 10, und zwar von der Kupplung K1 auf die Eingangswelle 12, dann über den Stirnradtrieb 30, 38 auf die Vorgelegewelle 16 und über den Variator 40 auf die Abtriebswelle 18. Dabei wird in bekannter Weise die Übersetzung stufenlos geregelt, im Rahmen der gewählten Getriebespreizung des Variators.

Soll beispielsweise bei konstantem Fahrbetrieb des Kraftfahrzeuges auf Economybetrieb umgeschaltet werden, so werden das Zahnrad 22 mittels der Synchronkupplung S1 mit der Hohlwelle 14 gekuppelt, danach die Kupplung K1 geöffnet und gleichzeitig die Kupplung K2 geschlossen.

Somit erfolgt der Kraftfluss wieder über den vorbeschriebenen Antriebsstrang mit der Hohlwelle 14, wobei die eingestellte Konstantübersetzung einem sogenannten over drive (oder E-Gang) entsprechen kann.

Zumindest in der beschriebenen Economy-Übersetzungsstufe kann es vorteilhaft sein, die Abtriebswelle 18 in einen Abschnitt 18a und einen Abschnitt 18b zu unterteilen und mit einer dritten Kupplung K3 (vgl. gestrichelte Darstellung) zu versehen. Die Kupplung K3 kann eine hydraulisch betätigte Lamellenkupplung sein. Durch Öffnen der Kupplung K3 im Economybetrieb wird der Variator 40 stillgesetzt, wodurch der Verschleiß vermindert und der Wirkungsgrad des Getriebes 10 im Economybetrieb erhöht wird.

Es sei noch erwähnt, dass der Rückwärtsgang des Getriebes 10 schaltbar ist, indem die Synchronkupplung S2 das Zahnrad 28 mit der Eingangswelle 12 kuppelt und die reibschlüssige Kupplung K1 geschlossen wird.

Je nach Auslegung der konstanten Anfahr-Übersetzung, der Economy-Übersetzung und des Wandlungsbereiches des Variators 40 kann die Gesamtspreizung des Getriebes 10 vergrößert werden; die genannten Konstant-Übersetzungen können aber auch dazu dienen, die kritischen Variatorbereiche in der kleinsten und größten Übersetzung abzudecken, um unzulässigen Verschleiß und/oder Überbelastungen auszuschließen.

Abweichend vom beschriebenen Ausführungsbeispiel könnte der Variator als i² Getriebe ausgeführt sein, bei dem nach dem Durchfahren des Wandlungsbereiches der Kraftfluß umgekehrt und quasi im Rücktrieb unter Einschaltung eines Stirnradtriebes mit definiertem Übersetzungsverhältnis und entsprechender Umschaltung von Kupplungen der Wandlungsbereich quadrierbar bzw. der Variator 40 entsprechend kompakter ausführbar ist (z.B. Verminderung der Kettenlänge).

Ferner könnte zur Erzielung eines Allradantriebs des Kraftfahrzeugs der Abschnitt 18b der Abtriebswelle 18 einen weiteren, mit einer Kardanwelle verbindbaren Abtrieb bilden (durch entsprechende Durchführung durch das Getriebegehäuse und Anordnung eines Abtriebsflansches), mittels dem die Hinterräder des Kraftfahrzeuges antreibbar wären. Als Kupplung K3 könnte zum Ausgleich der sich an den Abschnitten 18a und 18b der Abtriebswelle 18 ergebenden Drehzahldifferenzen eine schlupfgeregelte Kupplung verwendet sein.

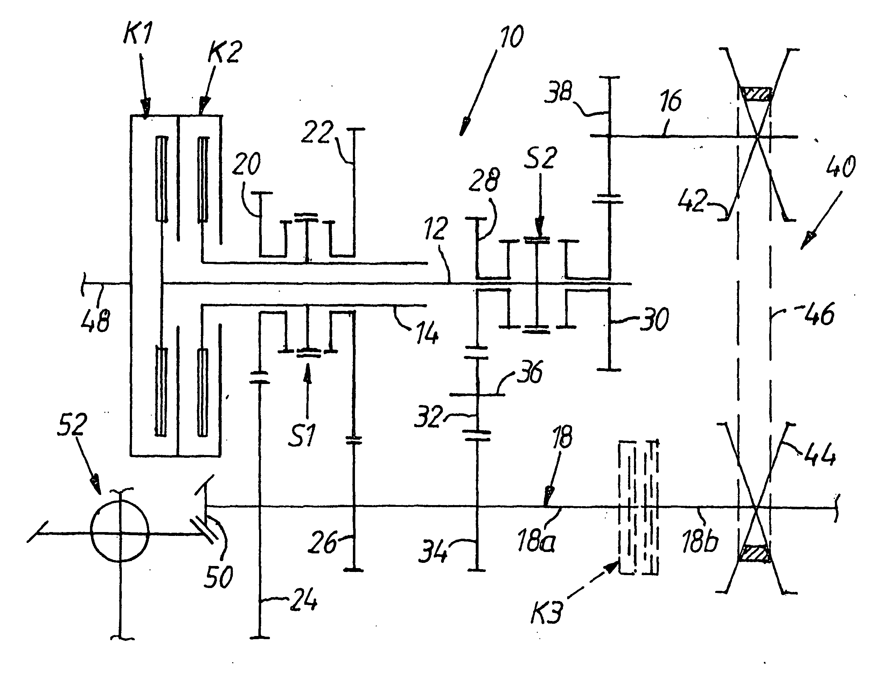

## Patentansprüche

1. Geschwindigkeits-Wechselgetriebe, insbesondere für Kraftfahrzeuge, mit einem stufenlos verstellbaren Variator und zumindest einer konstanten Übersetzungsstufe sowie mit
- einem ersten Antriebsstrang mit einer ersten Kupplung (K1) zum Aktivieren des Variators (40), und
- einem zweiten Antriebsstrang mit einer zweiten Kupplung (K2) zum Aktivieren der zumindest einen konstanten Übersetzungsstufe (20, 24 bzw. 22, 26), **dadurch gekennzeichnet, dass**
der zweite Antriebsstrang zwei konstante Übersetzungsstufen (20, 24 u. 22, 26) aufweist, die als eine Anfahr-Übersetzungsstufe (20, 24) und eine Übersetzungsstufe für hohe Geschwindigkeiten des Kraftfahrzeuges (22, 26) ausgelegt sind und die in dem zweiten Antriebsstrang über eine dritte Kupplung (S1) schaltbar sind,
der erste Antriebsstrang eine auf den Variator (40) wirkende Eingangswelle (12) und der zweite Antriebsstrang eine koaxial dazu angeordnete Hohlwelle (14) aufweist, wobei die Hohlwelle (14) die antreibenden Zahnräder (20, 22) der konstanten Übersetzungsstufen trägt, deren korrespondierende Zahnräder (24, 26) auf einer beiden Antriebssträngen (12, 14) gemeinsamen Abtriebswelle (18) sitzen, und
die erste und zweite Kupplung (K1, K2), die die Antriebsstränge aktivieren, eine an der Eingangswelle (12) und an der Hohlwelle (14) angeordnete, reibschlüssige Doppelkupplung bilden.

2. Wechselgetriebe nach Anspruch 1, **dadurch gekennzeichnet, dass** ein Antriebsstrang eine Schaltkupplung (S2) aufweist, mittels der der Variator (40) oder eine konstante Rückwärtsfahrstufe schaltbar ist.

3. Wechselgetriebe nach Anspruch 1 oder 2, **dadurch gekennzeichnet, dass** der Variator ein Umschlingungswandler (40) ist, dessen Antriebsscheibenpaar (42) über eine Vorgelegestufe (30, 38) und eine Vorgelegewelle (16) mit der Eingangswelle (12) trieblich verbunden ist und dessen Abtriebs-scheibenpaar (44) unmittelbar auf der Abtriebswelle (18) angeordnet ist.

4. Wechselgetriebe nach einem oder mehreren der Ansprüche 1 bis 3, **dadurch gekennzeichnet, dass** der Variator (40) axial hinter der Hohlwelle (14) des zweiten Antriebsstranges positioniert ist.

5. Wechselgetriebe nach einem oder mehreren der Ansprüche 1 bis 4, **dadurch gekennzeichnet, dass** abtriebsseitig des Variators (40) eine weitere Kupplung (K3) in der Abtriebswelle (18a, 18b) vorgesehen ist, mittels der der Variator (40) bei aktiviertem zweiten Antriebsstrang (14) abkuppelbar ist.

6. Wechselgetriebe nach einem oder mehreren der Ansprüche 1 bis 5, **dadurch gekennzeichnet, dass** der Variator als i² Getriebe zum zweifachen Durchfahren der stufenlosen Übersetzung ausgebildet ist.

7. Wechselgetriebe nach einem oder mehreren der Ansprüche 1 bis 6, **dadurch gekennzeichnet, dass** bei einem Getriebe (10) mit zweitem Abtrieb, z.B. für Allradantrieb oder Einzelradantrieb einer Antriebsachse, der eine Antriebsstrang (14) auf den einen Abtrieb (50) und der andere Antriebsstrang (12) auf den anderen Abtrieb, z.B. für die Hinterachse, wirkt.

## Claims

1. Speed change gears, in particular for motor vehicles, with an infinitely adjustable variator and at least one constant degree of transmission and also with
- a first drive line with a first clutch (K1) for activation of the variator (40), and
- a second drive line with a second clutch (K2) for activation of the at least one constant degree of transmission (20, 24 and 22,26 respectively), **characterised by** the fact that
the second drive line exhibits two constant degrees of transmission (20, 24 & 22, 26), which are designed as a starting degree of transmission (20, 24) and a degree of transmission for high speeds of the motor vehicle (22, 26) and which in the second drive line are switchable via a third clutch (S1),
the first drive line exhibits a primary shaft acting on the variator (40) and the second drive line a hollow shaft (14) fitted co-axially to it, in which the hollow shaft (14) carries the driving gears (20, 22) of the constant degrees of transmission, whose corresponding gears (24, 26) are seated on a drive shaft (18) common to both drive lines (12, 14) and
the first and second clutches (K1, K2), which activate the drive lines, form a friction closing double clutch, fitted one on the primary shaft (12) and one on the hollow shaft (14).

2. Change gears according to claim 1, **characterised by** the fact that one drive line exhibits a switch clutch (S2), by means of which the variator (40) or a constant backwards degree of travel can be switched on.

3. Change gears according to claim 1 or 2, **characterised by** the fact that the variator is a loop converter (40), whose pair of drive discs (42) is linked in drive via a back gear stage (30, 38) and a countershaft (16) with the primary shaft (12) and whose pair of secondary drive discs(44) is fitted directly on the secondary drive shaft (18).

4. Change gears according to one or more of the claims 1 to 3, **characterised by** the fact that the variator (40) is positioned axially behind the hollow shaft of the second drive line.

5. Change gears according to one or more of the claims 1 to 4, **characterised by** the fact that on the secondary drive side of the variator (40) a further clutch (K3) is provided in the secondary drive shaft (18a, 18b), by means of which the variator (40) can be disconnected with activated second drive line (14).

6. Change gears according to one or more of the claims 1 to 5, **characterised by** the fact that the variator is formed as 1² gear for dual passing through of the infinitely variable transmission.

7. Change gears according to one or more of the claims 1 to 5, **characterised by** the fact that with one gear (10) with second back gear, e.g. for all-wheel drive or single wheel drive of a drive axle, one drive line (14) acts on one back gear (50) and the other drive line (12) on the other back gear, e.g. for the rear axle.

## Revendications

1. Boîte de vitesses, en particulier pour véhicules automobiles, avec un variateur à réglage continu et au moins un rapport de transmission constant ainsi qu'avec
- une première chaîne cinématique avec un premier embrayage (K1) servant à activer le variateur (40), et
- une deuxième chaîne cinématique avec un deuxième embrayage (K2) servant à activer l'au moins un rapport de transmission constant (20, 24 et 22, 26),
**caractérisée en ce que**
la deuxième chaîne cinématique présente deux rapports de transmission constants (20, 24 et 22, 26), qui sont conçus comme un rapport de transmission de démarrage (20, 24) et un rapport de transmission pour des vitesses élevées du véhicule (22, 26) et qui sont embrayables dans la deuxième chaîne cinématique par le biais d'un troisième embrayage (S1),
la première chaîne cinématique présente un arbre d'entrée (12) agissant sur le variateur (40) et la deuxième chaîne cinématique, un arbre creux (14) agencé de manière coaxiale par rapport à la première, l'arbre creux (14) portant les roues dentées motrices (20, 22) des rapports de transmission constants, dont les roues dentées correspondantes (24, 26) sont fixées sur un arbre de sortie (18) commun aux deux chaînes cinématiques (12, 14) et
le premier et deuxième embrayages (K1, K2), qui activent les chaînes cinématiques, forment un double embrayage par friction disposé au niveau de l'arbre d'entrée (12) et au niveau de l'arbre creux (14).

2. Boîte de vitesses selon la revendication 1, **caractérisée en ce qu'**une chaîne cinématique présente un embrayage (S2) au moyen duquel le variateur (40) ou un rapport de marche arrière constant peut être connecté.

3. Boîte de vitesses selon la revendication 1 ou 2, **caractérisée en ce que** le variateur est un convertisseur d'enroulement (40), dont la paire de disques d'entraînement (42) est reliée par entraînement à l'arbre d'entrée (12) par le biais d'un rapport intermédiaire (30, 38) et d'un arbre intermédiaire (16) et dont la paire de disques d'entraînement (44) est agencée directement sur l'arbre de sortie (18).

4. Boîte de vitesses selon une ou plusieurs des revendications 1 à 3, **caractérisée en ce que** le variateur (40) est positionné axialement derrière l'arbre creux (14) de la deuxième chaîne cinématique.

5. Boîte de vitesses selon une ou plusieurs des revendications 1 à 4, **caractérisée en ce qu'**un autre embrayage (K3) est prévu, côté sortie du variateur (40), dans l'arbre de sortie (18a, 18b), au moyen duquel le variateur (40) peut être désaccouplé lorsque la deuxième chaîne cinématique (14) est activée.

6. Boîte de vitesses selon une ou plusieurs des revendications 1 à 5, **caractérisée en ce que** le variateur est réalisé sous forme de boîte de vitesses i² pour passer deux fois la transmission continue.

7. Boîte de vitesse selon une ou plusieurs des revendications 1 à 6, **caractérisée en ce que** dans une boîte de vitesses (10) avec une deuxième sortie, par exemple pour quatre roues motrices ou un entraînement à roues indépendantes d'un essieu d'entraînement, une des chaînes cinématiques (14) agit sur une des sorties (50) et l'autre chaîne cinématique (12) sur l'autre sortie, par exemple pour l'essieu arrière.
